# EUROPEAN PATENT APPLICATION

(11) **EP 4 668 873 A1**
(43) Date of publication of application: **24.12.2025**
(21) Application number: 25179780.9
(22) Date of filing: 30.05.2025
(51) Int. Cl.: H04W 48/18, H04W 52/02

(54) **POWER EFFICIENT DATA ROUTING**

(30) Priority: 17.06.2024 US 202418745821
(71) Applicant: Google LLC, Mountain View, CA 94043 (US)
(72) Inventor: Mustafa, Kamran, Mountain View, 94043 (US); Shevede, Sumukh Ashok, Mountain View, 94043 (US)
(74) Representative: Derry, Paul Stefan

(57) **Abstract**

In one example, a method for power efficient data routing comprises determining, by a computing device comprising a plurality of radios, one or more signal conditions for each of the plurality of radios, determining, by the computing device, an amount of data the computing device is predicted to transfer within a particular period of time, the amount of data being a predicted amount of data, determining, by the computing device and based on the one or more signal conditions for each of the plurality of radios and the predicted amount of data, a power cost for each of the plurality of radios, selecting, by the computing device, a selected radio from the plurality of radios based on the power cost for each of the plurality of radios, and transferring, by the computing device and using the selected radio, data between the computing device and a remote device.

## Description

### BACKGROUND

Consumer electronics may be expected to deliver an all day or multi-day battery life while maintaining connections with other devices (e.g., an Internet connection), such as through various communication technologies (e.g., BLUETOOTH^{®}, WI-FI^{®}, WI-FI-DIRECT^{®}, and/or cellular). Mobile devices (e.g., wearable computing devices) with small batteries (e.g. a 300 milliampere hour (mAh) battery) may have difficulties with respect to maintaining a connection while delivering all day or multi-day battery life.

### SUMMARY

In general, techniques of this disclosure are directed to power efficient data routing for wearable computing devices. In some examples, a wearable computing device may route data to be transmitted or received by a particular communication unit (e.g., WI-FI, BLUETOOTH, or cellular radio) based on routing information stored on or otherwise accessible to the wearable computing device. The routing information may indicate, for each communication unit of the wearable computing device and for a variety signal conditions (e.g., signal to noise ratio), a power cost to communicate or transfer (e.g., transmit or receive) a given amount of data (e.g., 1 megabyte (MB)) with another device. The power cost may represent an amount of power, such as a percentage consumption of battery capacity or by a measure of power consumption (e.g., milliwatt hours (mWh)).

Communication units may consume various amounts of power. For example, a WI-FI communication unit transmitting data transmitting at a 2.4 gigahertz (GHz) 6 MB/s data rate may consume a different amount of power (e.g., milliwatt hours (mWh)) than, for instance, when transmitting a single stream 5 GHz VHT 780 MB/s data rate. With respect to other radios (e.g., BLUETOOTH or cellular radios) communicating over WI-FI may usually consume less power (e.g., mWh) than either BLUETOOTH or cellular (e.g., Long Term Evolution (LTE^{™}) or 5G) for data that is 1 MB or greater in size in either good or bad signal conditions. Continuing this example, a BLUETOOTH communication unit may consume less power when communicating data that is up to 900 KB in size.

Some solutions may provide connectivity architectures with rules for communication via different communication units. These connectivity architectures may prioritize monetary cost, bandwidth, latency, and/or jitter over power efficiency (e.g., power consumption) when selecting a communication unit to maintain connectivity, such as to the Internet. As such, BLUETOOTH or BLUETOOTH LOW ENERGY (BLE) may be prioritized over WI-FI and LTE to the detriment of battery life.

In accordance with the techniques disclosed herein, the wearable computing device may perform power efficient data routing by transferring (e.g., transmitting or receiving) data through a communication unit with a low or the lowest power cost to the wearable computing device. As will be described herein, the wearable computing device may select a communication unit from a plurality of communication units (e.g., WI-FI, BLUETOOTH, or cellular radios) based on the routing information, one or more signal conditions, and the amount of data to be transferred. To communicate the data in a power efficient manner the wearable computing device may transmit or receive data with the selected communication unit. As will be described further below, the wearable computing device may apply a machine learning (ML) model to predict the amount of data to be transferred.

In one example, various aspects of the techniques are directed to a method comprising: determining, by a computing device comprising a plurality of radios, one or more signal conditions for each of the plurality of radios, determining, by the computing device, an amount of data the computing device is predicted to transfer within a particular period of time, the amount of data being a predicted amount of data, determining, by the computing device and based on the one or more signal conditions for each of the plurality of radios and the predicted amount of data, a power cost for each of the plurality of radios, selecting, by the computing device, a selected radio from the plurality of radios based on the power cost for each of the plurality of radios, and transferring, by the computing device and using the selected radio, data between the computing device and a remote device.

In another example, various aspects of the techniques are directed to a computing system comprising: a memory that stores instructions, and processing circuitry that executes the instructions to: determine one or more signal conditions for each of a plurality of radios, determine an amount of data the computing device is predicted to transfer within a particular period of time, the amount of data being a predicted amount of data, determine, based on the one or more signal conditions for each of the plurality of radios and the predicted amount of data, a power cost for each of the plurality of radios, select a selected radio from the plurality of radios based on the power cost for each of the plurality of radios, and transfer, using the selected radio, data between the computing device and a remote device.

In another example, various aspects of the techniques are directed to non-transitory computer-readable storage medium comprising instructions, that when executed by one or more processors of a computing system, cause the one or more processors to: determine one or more signal conditions for each of a plurality of radios, determine an amount of data the computing device is predicted to transfer within a particular period of time, the amount of data being a predicted amount of data, determine, based on the one or more signal conditions for each of the plurality of radios and the predicted amount of data, a power cost for each of the plurality of radios, select a selected radio from the plurality of radios based on the power cost for each of the plurality of radios, and transfer, using the selected radio, data between the computing device and a remote device.

The details of one or more examples of the disclosure are set forth in the accompanying drawings and the description below. Other features, aspects, and advantages of the disclosure will be apparent from the description, the drawings, and the claims.

### BRIEF DESCRIPTION OF DRAWINGS

FIG. 1 is a conceptual diagram illustrating an example environment for power efficient data routing, in accordance with one or more aspects of the present disclosure.
FIG. 2 is a chart illustrating example power costs, in accordance with one or more aspects of the present disclosure.
FIG. 3 is a block diagram illustrating an example wearable computing device that performs power efficient data routing, in accordance with one or more aspects of this disclosure
FIG. 4 is a flowchart illustrating a first example process for power efficient data routing, in accordance with one or more aspects of the present disclosure.
FIG. 5 is a flowchart illustrating a second example process for power efficient data routing, in accordance with one or more aspects of the present disclosure.

### DETAILED DESCRIPTION

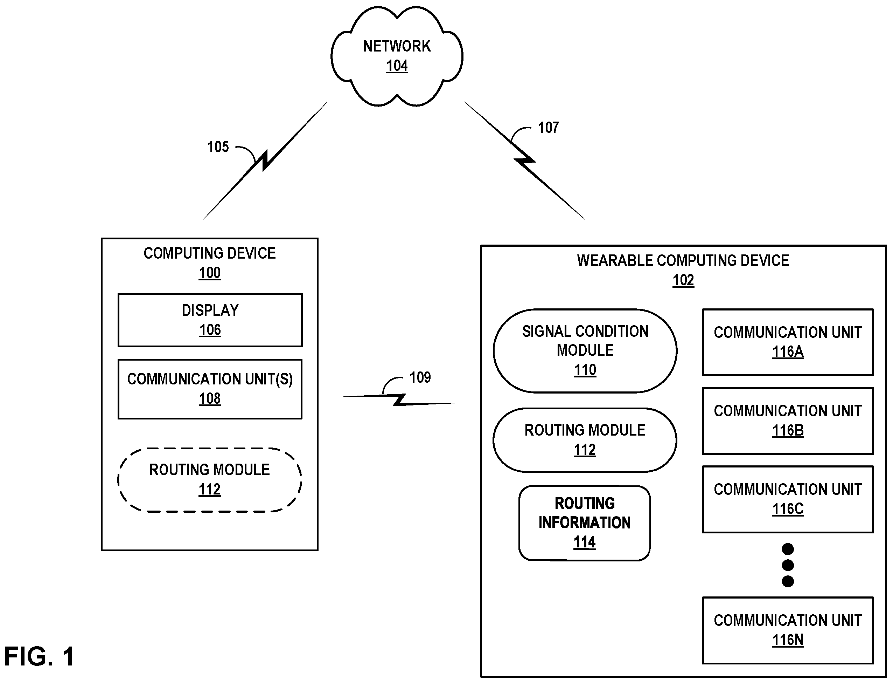

FIG. 1 is a conceptual diagram illustrating an example system that performs power efficient data routing, in accordance with one or more techniques of this disclosure. The example system of FIG. 1 includes computing device 100, wearable computing device 102, and network 104. Computing device 100 and wearable computing device 102 may be separate devices that may be remote from one another. Wearable computing device 102 may communicate or transfer (e.g., transmit and/or receive) data with computing device 100 such as to provide one or more services to a user. For example, wearable computing device 102 and computing device 100 may communicate fitness tracking information (e.g., step counts, heart rate) to provide fitness tracking services to the user. For instance, wearable computing device 102 may transmit fitness tracking information to computing device 100 and computing device 100 may receive the fitness tracking information, process and/or present the fitness tracking information to the user in an interactive manner.

In addition to the example of fitness tracking information, wearable computing device 102 may communicate a variety of data with computing device 100, including messages, images, video, audio, firmware, software, or other text or binary data. In some examples, wearable computing device 102 and computing device 100 may be companion devices. For instance, both computing device 100 and wearable computing device 102 may be associated with a single user and one device, such as wearable computing device 102, may require connectivity to the other device (e.g., computing device 100) in order to be fully functional.

In the example of FIG. 1, computing device 100 may be a smartphone or another type of portable or mobile device. Other examples of computing device 100 may be a mobile phone, a personal digital assistant (PDA), a laptop computer, a tablet computer, a portable gaming device, a portable media player, an e-book reader, a watch, a television, or an automobile navigation/entertainment system. In the example of FIG. 1, wearable computing device 102 is a wearable computing device (e.g., a computerized watch, smart watch device, or smart ring device). However, in other examples, wearable computing device 102 may be a mobile phone, a tablet computer, a PDA, a laptop computer, a portable gaming device, a portable media player, an e-book reader, a television platform, an automobile computing platform or system, a fitness tracker, or any other type of mobile or non-mobile computing device capable of managing communication units (e.g., communication radios) in a power efficient manner, in accordance with one or more of the techniques described herein.

In some examples, wearable computing device 102 and computing device 100 may be peer devices. For instance, wearable computing device 102 and computing device 100 may respectively be client and server devices that transfer data between one other. As such, in the example of FIG. 1, computing device 100 may be a desktop computer, server, network appliance, or another type of server device. In some examples, computing device 100 may constitute a physical or virtual device of at least a portion of a cloud service. Though shown as connecting with a single computing device 100, wearable device 102 may simultaneously communicate with a plurality of different computing devices 100, including companion and peer devices.

Network 104 represents any public or private communication network, for instance, a cellular, WI-FI, and/or other type of network for transmitting data between computing devices. Computing device 100 and wearable computing device 102 may send and receive data across network 100 using any suitable communication techniques. For example, computing device 100 may be operatively coupled to network 104 using network link 105 and wearable computing device 102 may be operatively coupled to network 104 by network link 107. Network 104 may include network hubs, network switches, network routers, and other network devices that are operatively inter-coupled thereby providing for the exchange of information between computing device 100 and wearable computing device 102. In some examples, network links 105 and 107 may be Ethernet, Asynchronous Transfer Mode (ATM) network, or other network connections and such connections may be wireless and/or wired connections, including cellular network connections.

Computing device 100 and wearable computing device 102 may also transfer data without traversing network 104 by, for example, using direct link 109. Direct link 109 may be any network communication protocol or mechanism capable of enabling two computing devices to communicate directly (i.e., without requiring a network switch, hub, or other intermediary network device), such as BLUETOOTH^{®}, WI-FI DIRECT^{®}, near-field communication (NFC), etc.

As shown in FIG. 1, computing device 100 may include display 106 and one or more communication units 108. Display 106 of computing device 100 may function as an input device for computing device 100, an output device, or both. For example, display 106 may be a presence-sensitive display implemented using various technologies. For instance, display 106 may function as an input device using a presence-sensitive input component, such as a resistive touchscreen, a surface acoustic wave touchscreen, a capacitive touchscreen, a projective capacitance touchscreen, a pressure sensitive screen, an acoustic pulse recognition touchscreen, or another presence-sensitive display technology. Display 106 may function as an output (e.g., display) device using any one or more display components, such as a liquid crystal display (LCD), dot matrix display, light emitting diode (LED) display, organic light-emitting diode (OLED) display, e-ink, or similar monochrome or color display capable of outputting visible information to a user of computing device 100. Communication units 108 may include wired or wireless communication devices capable of transmitting and/or receiving communication signals such as an Ethernet transceiver, optical transceiver, a cellular radio, an LTE/5G radio, a BLUETOOTH radio, or a WI-FI radio.

Wearable computing device 102 may include signal condition module 110, routing module 112, and communication units 116A-116N (collectively, "communication units 116"), which may also be referred to herein as radios 116A-116N (collectively, "radios 116"). Examples of communication units 116 include wireless communication devices capable of transmitting and/or receiving communication signals such as a cellular radio, an LTE/5G radio, a BLUETOOTH^{®} radio, or a WI-FI radio. Signal condition module 110 and routing module 112 may perform operations described herein using software, hardware, or a mixture of both hardware and software residing in and executing on wearable computing device 102. Wearable computing device 102 may execute signal condition module 110 and routing module 112 with one or more processors. In some examples, wearable computing device 102 may execute signal condition module 110 and routing module 112 in a virtual machine on underlying hardware.

In accordance with techniques of the disclosure, routing module 112 may perform power efficient data routing by selecting a communication unit 116A to use for communication purposes (e.g., data transfer) in a manner that preserves stored electrical energy (e.g., battery power) for given signal conditions and an amount of data to be transferred. In some examples, routing module 112 may deactivate the remaining (e.g., unselected) communication units 116B-116N to conserve power. Routing module 112 may route data through the selected communication unit 116A to communicate with another device, such as computing device 100. For example, routing module 112 may transmit or receive data using selected communication unit 116. Though some examples provided herein primarily may describe selection of a particular communication unit 116 (e.g., a WIFI radio), routing module 112 may select any of communication units 116 in accordance with the techniques of this disclosure.

Routing module 112 may determine which of communication units 116 to select and use to transfer data based on routing information 114. In general, routing information 114 may indicate the power cost of communication units 116 for various amounts of data and various signal conditions. For example, routing information 114 may include the power cost in terms of power consumption (e.g., mWh) for each communication unit 116 to transfer (e.g., transmit and/or receive) a given amount of data (e.g., 100 KBs, 500 KBs, 1 MB, 5 MB, etc.) under various signal conditions (e.g., various signal to noise or signal power levels). Routing information 114 may be a table or other data structure stored on wearable computing device 102 or that is otherwise accessible to wearable computing device 102.

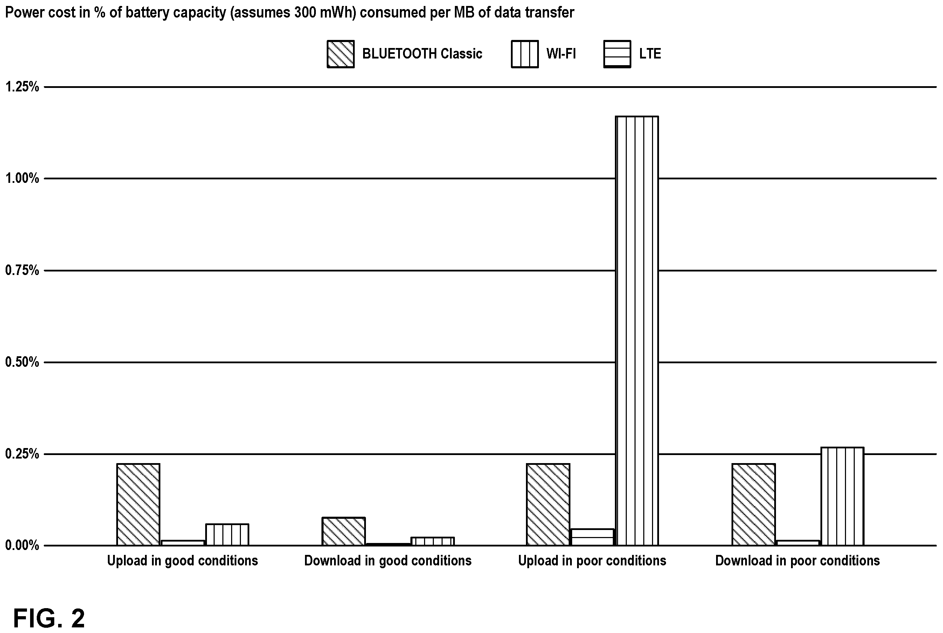

FIG. 2 is a chart illustrating example power costs, in accordance with one or more aspects of the present disclosure. Some aspects of FIG. 2 are described in the context of FIG. 1. As can be seen, FIG. 2 illustrates power costs for example communication units in the form of a BLUETOOTH Classic communication unit, a WI-FI communication unit, and an LTE communication unit. The BLUETOOTH Classic communication unit, WI-FI communication unit, and LTE communication unit may respectively be examples of communication units 116A-116C of FIG. 1.

Referring to FIG. 2, it can be seen that transferring data (e.g., transmitting and/or receiving data) over WI-FI may usually be cheaper in terms of power cost (e.g., mWh) relative to either LTE or BLUETOOTH for an amount of data 1 MB in size, in both good and poor signal conditions. It can also be seen that communicating over LTE may be more expensive in terms of power cost. For illustrative purposes, the example of FIG. 2 assumes a battery capacity of 300 mWh and wearable computing device 102 may have less or more battery capacity in some examples.

Some downloads by wearable device 102 may be relatively large in size (e.g. a full GOOGLE^{®} Mobile Services (GMS) Core update may be ~40-50MB in size). Network service providers (e.g., cellular service providers) may require that all data to be handled by a system proxy (e.g., sysproxy) over BLUETOOTH Classic when wearable device 102 is tethered (e.g., paired) to a companion computing device 100. As such, the user experience for latency and power are both adverse to efficient power consumption if using the current radio allocation rules.

As shown in FIG. 2 for example, to download 40 megabytes (MBs) of data using BLUETOOTH Classic, wearable device 102 may consume 0.075% per MB, or 0.075 * 40MB = 3% battery (e.g., 45 minutes of battery life for wearable device 102 having 300 mWh of battery capacity) in good signal conditions. At 1 megabits per second (Mb/s), the total data transfer will need 40 MB / 1 Mb = 320 seconds, or 5.3 minutes. In accordance with the disclosed techniques, wearable device 102, such as through routing module 112, may select WI-FI communication unit 116B, which will consume 0.004% (in good signal conditions) to 0.013% (in poor signal conditions) per MB transferred, or 0.16% (during good signal conditions) to 0.52% (during poor signal conditions) of consumed battery capacity. Relative to BLUETOOTH Classic, battery consumption may be 6-18 times lower using WI-FI instead of BLUETOOTH Classic. In terms of throughput, continuing the above example, throughput may range from ~3.88 Mb/s (during good signal conditions) to ~1.38 Mb/s (during poor signal conditions) for WI-FI. As such, wearable device 102 may complete the data transfer in 82 seconds (during good signal conditions) to 320 secs (during poor signal conditions) both of which are superior to BLUETOOTH Classic (e.g., are less than 320 seconds).

Wearable device 102 may generate routing information 114, including a power cost, for each communication unit 116. For example, wearable device 102 may transfer a given amount of data (e.g., 100 KB, 500 KB, 1 MB, etc.) with each communication unit 116 and record, in routing information 114, the power cost (e.g., mWh or percentage of overall battery capacity consumed) for each amount of data and each communication unit 116 for a variety of signal conditions. Wearable computing device 102 may generate routing information 114 for incremental amounts of data, such as data sizes in increments of 100KB (e.g., 100 KB, 200 KB, 300KB, ... 900KB, etc.) up to a size n of data (e.g., 100 MB or more) and store such power costs in routing information 114.

Table 1 below shows an example of routing information 114 corresponding to the chart of FIG. 2. As can be seen, routing information 114 may include a power cost for individual communication units 116 under various signal conditions (e.g., good or poor). Routing information 114 may represent power cost in various ways, such as by a percentage of overall battery capacity as shown in Table 1, or in absolute terms, such as in mWh.

**Table 1 - Routing Information**

| Signal Condition | Power Cost in % of Battery Capacity Consumed per MB of Data Transfer | | |
|---|---|---|---|
| | Communication Unit 116A | Communication Unit 116B | Communication Unit 116C |
| Poor (Upload) | 0.21% | 0.05% | 1.18% |
| Poor (Download) | 0.21% | 0.013% | 0.27% |
| Good (Upload) | 0.21% | 0.013% | 0.07% |
| Good (Download) | 0.075% | 0.004% | 0.03% |

Though shown with two signal conditions (e.g., good and poor), wearable computing device 102 may generate routing information 114 for other signal conditions (e.g., excellent, good, medium, and poor). For example, one or more of communication units 116 may have a finite number of power states corresponding to varying levels of signal quality (e.g., WI-FI communication unit 116B may have four power states). Wearable computing device 102 may generate routing information 114 for each or a subset of these power states in some examples. For example, wearable device 102 may transfer a given amount of data (e.g., 100 KB, 500 KB, 1 MB, etc.) with each communication unit 116 for each signal condition (e.g., power state) and store, in routing information 114, the power cost for each communication unit 116 for each amount of data and each signal condition.

In some examples, wearable computing device 102 may, such as after generating routing information 114 for communication devices 116, store routing information 114 to computing device 100, which may correspond to a server device. As such, in some examples, wearable computing device 102 may determine routing information 114 by retrieving (e.g., downloading) routing information 114 from computing device 100, directly or through network 104, rather than generating routing information 114 locally at wearable computing device 102.

Referring back to FIG. 1, routing module 112 may identify a power cost for each communication unit 116 by querying or crossing referencing routing information 114 with the respective signal condition for each communication unit 116 and the amount of data to be transferred. In some examples, the type of transfer (e.g., upload/transmit or download/receive) may also be required to determine a power cost for communication unit 116. For instance, to identify a power cost for communication unit 116, routing module 112 may identify the power cost under a current signal condition and the amount of data to be transferred. To illustrate with the example of Table 1, when 1 MB of data is to be transmitted (e.g., uploaded) in good signal conditions, routing module 112 may identify a power cost of 0.075% for communication unit 116A, a power cost of 0.004% for communication unit 116B, and a power cost of 0.03% for communication unit 116C in routing information 114. When 1 MB of data is to be transmitted in poor signal conditions, routing module 112 may identify a power cost of 0.21% for communication unit 116A, a power cost of 0.05% for communication unit 116B, and a power cost of 1.18% for communication unit 116C.

Routing module 112 may select communication unit 116 with the lowest power cost to transfer data in a power efficient manner. Continuing the example of Table 1, in both good and poor signal conditions communication unit 116B has the lowest power cost to transfer 1 MB. As such, routing module 112 may select communication unit 116B to transfer, in this case upload, the 1 MB of data. In some cases, communication units 116 may experience different signal conditions. For example, communication unit 116A may have a poor signal condition while communication unit 116B has a good signal condition, or vice versa. In some cases, one or more communication units 116 may be unavailable for data transfer purposes such as due to a very poor or nonexistent signal condition that prevents communication. In such case, routing module 112 may select from available communication units 116 (e.g., communication units 116 with signal conditions suitable for data transfer) with the lowest power cost. For instance, in the example of Table 1, assuming communication unit 116B is unavailable, routing module 112 may select communication unit 116C to download (e.g., receive) 1 MB of data, assuming communication unit 116C has a good signal condition because the power cost of 0.03% for communication unit 116C is lower than the power cost of communication unit 116A regardless of good or poor signal conditions (e.g., is lower than 0.075% or 0.21% respectively).

Routing module 112 may determine (e.g., predict) the amount of data (e.g., 100 KB, 500 KB, 1 MB, 10 MB, etc.) to be transferred. Routing module 112 may determine the amount of data to be transferred in various ways. For example, routing module 112 may determine the amount of data to be transferred based on one or more rules or heuristics and contextual information relating to wearable computing device 102. As will be described further below, routing module 112 may determine the amount of data to be transferred by applying a machine learning (ML) model that predicts the amount of data to be transferred based on the contextual information. Some examples of the contextual information include, the current time, current date, location of wearable computing device 102, and foreground applications and/or background applications currently running on wearable computing device 102. The contextual information may be considered a device context in some examples as the contextual information may provide information about one or more devices (e.g., wearable computing device 102).

In some examples, computing device 100, rather than wearable computing device 102, may determine the amount of data to be transferred. As shown in FIG. 1, computing device 100 may optionally include routing module 112, or a portion thereof. As such, in some examples, computing device 100 may include one or more rules, heuristics, and/or ML models, which computing device may apply or execute relative to contextual information relating to computing device 100 to determine the amount of data to be transferred. As described above, some examples of the contextual information include, the current time, current date, location of computing device 100, and foreground applications and/or background applications currently running on computing device 100.

Computing device 100 may, such as through routing module 112, determine the amount of data to be transferred and send an indication of the amount of data to be transferred to wearable computing device 102, such as through communication unit 108. As such, in some examples, wearable computing device 102 may determine the amount of data to be transferred by receiving the indication of the amount of data to be transferred from computing device 100 rather than determining the amount of data to be transferred locally (e.g., on wearable computing device 102). In some examples, the indication of the amount of data to be transferred may indicate the amount of data wearable computing device 102 will download from computing device 100.

Routing module 112 at computing device 100 may perform operations described herein using software, hardware, or a mixture of both hardware and software residing in and executing on computing device 100. Computing device 100 may execute routing module 112 with one or more processors. In some examples, computing device 100 may execute signal condition module 110 and routing module 112 in a virtual machine on underlying hardware.

Wearable computing device 102, such as through signal condition module 110, may determine a current signal condition for communication units 116. In some examples, signal condition may correspond to a signal to noise ratio or other indication of signal power level, signal strength, or signal quality. For example, for communication unit 116A and communication unit 116B corresponding respectively to a BLUETOOTH radio and WI-FI radio, the signal condition may be a received signal strength indicator (RSSI) and, for a cellular radio (e.g., communication unit 116C), the signal condition may be reference signal received power (RSRP). The signal condition may be a relative measure, such as RSSI or RSRP or may be an absolute measure, such as decibel-milliwatts (dBm). Signal condition module 110 may determine a current signal condition for each communication unit 116 from signal sensing hardware of each communication unit 116.

As described above, routing module 112 may use the amount of data to be sent and current signal conditions to identify a power cost for each communication unit 116, such as by querying or cross referencing routing information 114 with the amount of data to be sent and the current signal conditions for each communication unit. To illustrate with the example of Table 1 above, when 1 MB of data is to be transmitted (e.g., uploaded) in good signal conditions, routing module 112 may identify a power cost of 0.075% for communication unit 116A, a power cost of 0.004% for communication unit 116B, and a power cost of 0.03% for communication unit 116C in routing information 114. When 1 MB of data is to be transmitted in poor signal conditions, routing module 112 may identify a power cost of 0.21% for communication unit 116A, a power cost of 0.05% for communication unit 116B, and a power cost of 1.18% for communication unit 116C.

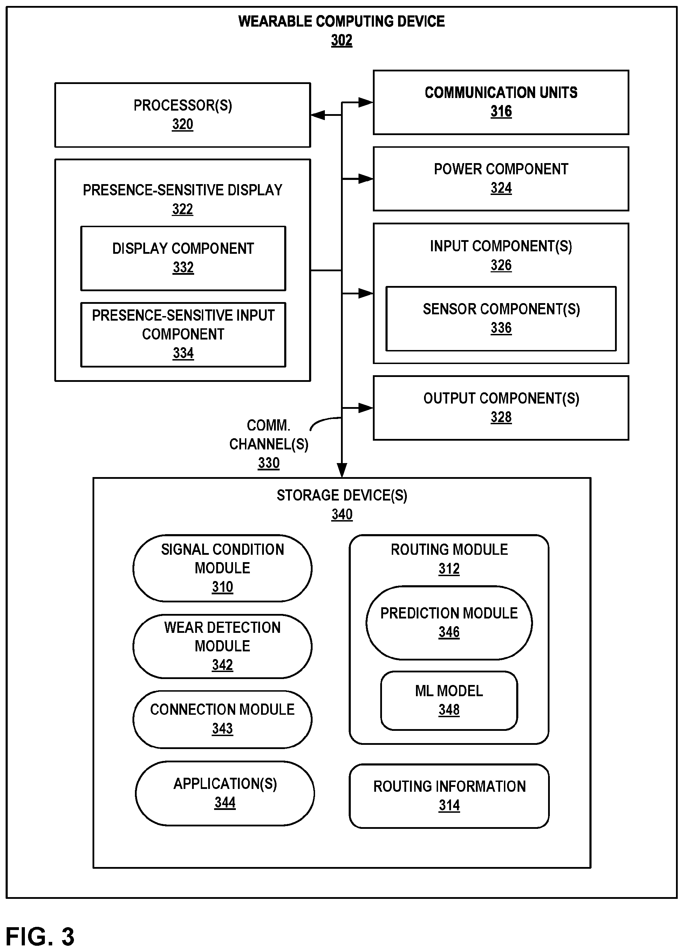

FIG. 3 is a block diagram illustrating an example wearable computing device that performs power efficient data routing, in accordance with one or more aspects of this disclosure. Some aspects of FIG. 3 may be described in the context of FIG. 1. For example, wearable computing device 302, communication units 316, signal condition module 310, routing module 312, and routing information 314 of FIG. 3 may respectively be examples of wearable computing device 102, communication units 116, signal condition module 110, routing module 112, and routing information 114 of FIG. 1.

As can be seen, wearable computing device 302 may include communication units 316, one or more processors 320, a presence-sensitive display 322, a power component 324, one or more input components 326, one or more output components 328, one or more sensor components 336, and one or more storage devices 340. Communication channels 330 may interconnect each of the components 316, 320, 322, 324, 326, 328, and 340 for inter-component communications (physically, communicatively, and/or operatively). In some examples, communication channels 330 may include a system bus, a network connection, an inter-process communication data structure, or any other method for communicating data.

As shown in FIG. 3, wearable computing device 302 may include power component 324. In some examples, power component 324 may be a battery. Power component 324 may store electric power and provide electric power to one or more components of wearable computing device 302. Examples of power component 324 may include, but are not necessarily limited to, batteries having zinc-carbon, lead-acid, nickel cadmium (NiCd), nickel metal hydride (NiMH), lithium ion (Li-ion), and/or lithium ion polymer (Li-ion polymer) chemistries. In various examples, power component 324 may have various power capacities (e.g., 100-3000 mAh).

One or more storage devices 340 within wearable computing device 302 may store information required for use during operation of wearable computing device 302. Storage device 340, in some examples, has the primary purpose of being a short term and not a long term computer-readable storage medium. Storage device 340 on wearable computing device 302 may be a volatile memory and therefore not retain stored contents if powered off. Examples of volatile memories include random access memories (RAM), dynamic random access memories (DRAM), static random access memories (SRAM), and other forms of volatile memories known in the art. Storage device 340 may further be configured for long-term storage of information as non-volatile memory space and retain information after power on/off cycles. Examples of non-volatile memory configurations include magnetic hard discs, optical discs, floppy discs, flash memories, or forms of electrically programmable memories (EPROM) or electrically erasable and programmable (EEPROM) memories. In some examples, processors 320 on wearable computing device 302 read and execute instructions stored by storage device 340. In the example of FIG. 3, storage device 340 of wearable computing device 302 includes signal condition module 310, routing module 312, routing information 314, wear detection module 342, and one or more applications 344. In addition, modules 310, 312, and 342 and applications 344 may store information within storage device 340 during program execution.

One or more processors 320 may implement functionality and/or execute instructions within wearable computing device 302. For example, processors 320 may process instructions stored in storage device 340 that execute the functionality of modules 310, 312, and 342 and applications 344. Applications 344 may be various software applications installed to wearable computing device 302. Some example applications 344 include, messaging, social networking, fitness, photo, music, web browsing, or other applications or games. When executed by processors 320, applications 344 may transfer various amounts and types of data to provide corresponding application functionality to the user.

Presence-sensitive display 322 of wearable computing device 302 includes display component 332 and presence-sensitive input component 334. Display component 332 may be a screen at which information is displayed by presence-sensitive display 322 and presence-sensitive input component 334 may detect an object at and/or near display component 332. As one example range, presence-sensitive input component 332 may detect an object, such as a finger or stylus that is within two inches or less of display component 332. Presence-sensitive input component 235 may determine a location (e.g., an [x, y] coordinate) of display component 332 at which the object was detected. In another example range, presence-sensitive input component 235 may detect an object six inches or less from display component 332 and other ranges are also possible. Presence-sensitive input component 334 may determine the location of display component 332 selected by a user's finger using capacitive, inductive, and/or optical recognition techniques. In some examples, presence-sensitive input component 334 also provides output to a user using tactile, audio, or video stimuli as described with respect to display component 332. In the example of FIG. 3, presence-sensitive display 322 may present a user interface.

While illustrated as an internal component of wearable computing device 302, presence-sensitive display 322 may also represent an external component that shares a data path with wearable computing device 302 for transmitting and/or receiving input and output. For instance, in one example, presence-sensitive display 322 represents a built-in component of wearable computing device 302 located within and physically connected to the external packaging of wearable computing device 302 (e.g., a screen on a mobile phone). In another example, presence-sensitive display 322 represents an external component of wearable computing device 302 located outside and physically separated from the packaging or housing of wearable computing device 302 (e.g., a monitor, a projector, etc. that shares a wired and/or wireless data path with wearable computing device 302).

Presence-sensitive display 322 of wearable computing device 302 may receive tactile input from a user of wearable computing device 302. Presence-sensitive display 322 may receive indications of the tactile input by detecting one or more tap or non-tap gestures from a user of wearable computing device 302 (e.g., the user touching or pointing to one or more locations of presence-sensitive display 322 with a finger or a stylus pen). Presence-sensitive display 322 may present output to a user. Presence-sensitive display 322 may present the output as a graphical user interface, which may be associated with functionality provided by various functionality of wearable computing device 302. For example, presence-sensitive display 322 may present various user interfaces of components of a computing platform, operating system, applications, or services executing at or accessible by wearable computing device 302 (e.g., an electronic message application, a navigation application, an Internet browser application, a mobile operating system, etc.). A user may interact with a respective user interface to cause wearable computing device 302 to perform operations relating to one or more of the various functions.

Presence-sensitive display 322 of wearable computing device 302 may detect two-dimensional and/or three-dimensional gestures as input from a user of wearable computing device 302. For instance, a sensor of presence-sensitive display 322 may detect a user's movement (e.g., moving a hand, an arm, a pen, a stylus, etc.) within a threshold distance of the sensor of presence-sensitive display 322. Presence-sensitive display 322 may determine a two or three dimensional vector representation of the movement and correlate the vector representation to a gesture input (e.g., a hand-wave, a pinch, a clap, a pen stroke, etc.) that has multiple dimensions. In other words, presence-sensitive display 322 can detect a multidimensional gesture without requiring the user to gesture at or near a screen or surface at which presence-sensitive display 322 outputs information for display. Instead, presence-sensitive display 322 can detect a multi-dimensional gesture performed at or near a sensor which may or may not be located near the screen or surface at which presence-sensitive display 322 outputs information for display.

Wearable computing device 302 may include one or more input components 326 that wearable computing device 302 uses to receive input. Examples of input are tactile, audio, image and video input. Input components 326 of wearable computing device 302, in one example, includes a presence-sensitive display, touch-sensitive screen, voice responsive system, a microphone or any other type of device for detecting input from a human or machine. In some examples, input components 326 include one or more sensor components 336. Numerous examples of sensor components 336 exist and include any input component configured to obtain environmental information about the circumstances surrounding wearable computing device 302 and/or physiological information that defines the activity state and/or physical well-being of a user of wearable computing device 302. For example, sensor components 336 may include movement sensors (e.g., accelerometers), temperature sensors, position sensors (e.g., a gyro), pressure sensors (e.g., a barometer), proximity sensors (e.g., an infrared sensor), ambient light detectors, heart-rate monitors, location sensors (GPS components, WI-FI components, cellular components), and any other type of sensing component (e.g., microphone, a still camera, a video camera, a body camera, eyewear, or other camera device that is operatively coupled to wearable computing device 302, infrared proximity sensor, hygrometer, and the like). Wearable computing device 302 may use sensor components 336 to obtain contextual information associated with wearable computing device 302 and a user. In some examples, one or more of signal condition module 310, routing module 312 and wear detection module 342 may rely on the sensor information obtained by sensor components 336.

Wearable computing device 302 may include one or more output components 328 that wearable computing device 302 uses to provide output. Examples of output include tactile, audio, still image and video output. Output components 320 of wearable computing device 302, in one example, includes a presence-sensitive display, sound card, video graphics adapter, speaker, liquid crystal display (LCD), haptic motor, or any other type of device for generating output to a human or machine.

In accordance with the techniques of this disclosure, routing module 312 may select one or more communication units from communication units 316 to utilize for transferring data (e.g., communicating) with another computing device (e.g., computing device 100 of FIG. 1) and/or for sending or receiving data (e.g., over the Internet, to the other computing device, etc.) in a power efficient manner. As shown in FIG. 3, routing module 312 includes prediction module 346 and connection module 343.

In instances where wearable computing device 302 is attempting to establish a connection with another computing device (e.g., computing device 100 of FIG. 1), routing module 312 may use a relatively low power one of communication units 316 (e.g., a BLUETOOTH radio) and attempt to connect to computing device 100 using a direct wireless connection (e.g., wireless link 109 of FIG. 1). That is, routing module 312 may be configured to initially attempt to establish a connection with computing device 100 using a communication unit of communication units 316 with lower or the lowest power consumption relative to other communication units of communication units 316 for establishing a connection with computing device 100. When attempting to establish a connection with computing device 100, communication unit 316 may be in a "listen" mode where the communication unit 316 detects if any other computing devices using the same type of communication (e.g., BLUETOOTH) are reachable.

Connection module 343 may determine if communication unit 316 detects computing device 100 and, if so, causes wearable computing device 302 to establish a connection (e.g., a BLUETOOTH connection) to computing device 100. If connection module 343 determines that computing device 100 is not reachable via a particular type of communication unit 316 (e.g., BLUETOOTH), connection module 343 may activate another one of communication units 316 for establishing the connection with computing device 100. For example, wearable computing device 302 may be preconfigured to attempt to connect to network 104 of FIG. 1 using a first communication unit from communication units 316 (e.g., WI-FI radio) and, if unable to connect using the first communication unit 316, connect to network 104 using a second communication unit from communication units 316 (e.g., LTE or 5G cellular radio). Wearable computing device 302 may be preconfigured to establish a connection to computing device 100 and/or the Internet using one or more of communication units 316 that require the least amount of power to establish and/or maintain such a connection relative to other communication units of communication units 316.

In attempting to establish a network connection (e.g., a WI-FI connection), connection module 343 may cause communication unit 316 to perform a network scan. For example, one of communication units 316 that corresponds to a WI-FI radio may perform a scan to determine which, if any, WI-FI networks are available. Connection module 343 may analyze the list of available WI-FI networks and determine if any are "known" WI-FI networks, i.e., whether the service set identifier ("SSID") of any of the available WI-FI networks corresponds to WI-FI network configuration information stored at wearable computing device 302 such that wearable computing device 302 may establish a connection to the WI-FI network. If one of the available WI-FI networks is a known WI-FI network, connection module 343 attempts to establish a connection to the known WI-FI network.

If connection module 343 is unable to establish a connection using communication unit 316, connection module 343 may place communication unit 316 in a deactivated, lower power, or "sleep" mode. For example, if none of the available WI-FI networks is a known WI-FI network or if with a known WI-FI network, connection module 343 may temporarily place communication unit 316 corresponding to the WI-FI radio in a low power or "sleep" mode. Connection module 343 may attempt to establish a network or direct connection using another one of communication units 316.

Wear detection module 342 may analyze sensor data from one or more sensor components 336 to determine whether wearable computing device 302 is currently being worn and an amount of time that has elapsed since wearable computing device 302 last moved. In examples where sensor components 336 includes one or more of a heart rate monitor, a galvanic skin response sensor, or other sensor that can detect whether wearable computing device is in contact with a user's skin, wear detection module 342 may analyze the sensor information to determine if wearable computing device 302 is currently being worn. For example, if the heart rate monitor provides heart rate information to wear detection module 342, wear detection module 342 can determine if the heart rate information is valid heart rate information (e.g., indicates a heart rate greater than zero beats per minute, less than 336 beats per minute, etc.) and, in response to determining that the heart rate information is valid, determine that wearable computing device 302 is currently being worn. As another example, wear detection module 342 may analyze data from the galvanic skin response sensor to determine if a user is currently wearing wearable computing device 302 (e.g., based on a current conductance detected by the galvanic skin response sensor).

Wear detection module 342 may also determine whether wearable computing device 302 is currently being worn using motion and/or position sensors (e.g., accelerometer, gyroscopes, etc. of sensor components 336). For example, wear detection module 342 may monitor movement patterns detected by sensor components 336 and determine whether the movement patterns correspond to known movements (e.g., of a limb) of a user. If the movement patterns correspond to known movements, wear detection module 342 may determine that wearable computing device is currently being worn. However, in various instances, wear detection module 342 may determine that wearable computing device 302 is currently being worn even if the movement patterns do not correspond to known movements. Instead, wear detection module 342 may determine that any motion of wearable computing device 302 indicates that wearable computing device 302 is currently being worn. Similarly, wear detection module 342 may determine that wearable computing device 302 is not currently being worn if wearable computing device 302 has not moved for a threshold amount of time (e.g., one minute, three minutes, five minutes, etc.).

Responsive to determining that wearable computing device 302 is not being worn, connection module 343 may power off one or more communication units 316, place one or more communication units 316 into a low power or reduced power mode, and/or adjust the frequency at which one or more communication units 316 attempt to establish respective network or direct connections. For example, connection module 343 may power off any WI-FI and cellular radios while leaving a BLUETOOTH radio powered on based on wear detection module 342 determining wearable computing device 302 is being worn.

Routing module 312 may select which one of communication units 316 to use to transfer data based on signal conditions and one or more characteristics of the data that is going to be sent from and/or received by wearable computing device 302. Each communication unit 316 may use a different amount of power (e.g., have a different power cost) for sending or receiving a particular amount of data during a particular signal condition. Routing module 312 may determine how much data is likely to be transferred using prediction module 346. Prediction module 346 of routing module 312 may predict an amount of data to be transferred based on a type of data (e.g., audio, video, text, etc.), an application associated with the data transfer (e.g., a video player application, a web browser, etc.), a priority assigned to the data being transferred (e.g., by a developer), an amount of bandwidth requested by the application associated with the data transfer, a length of a data queue, etc.

As one example, prediction module 346 may determine that the file type of the data being transferred corresponds to video data. In such an example, prediction module 346 may determine that, when transferring video data, a large amount of data is typically transferred by wearable computing device 302 (e.g., 10 MB or more). Some other examples of types of data that may constitute a large amount of data are firmware or software updates, such as a GSM Core update.

As another example, prediction module 346 may determine that the amount of data to be transferred is telemetry data associated with, for example, a fitness application. Such telemetry data may include heart rate, blood pressure, oxygen level, step counts, movement/activity measures, other fitness metrics, etc. Telemetry data may be relatively small (e.g., 1 KB to 500 KB) in that telemetry data may comprise data in the form of measurements or metrics. As such, prediction module 346 may determine that, when transferring such telemetry data, a relatively small amount of data (e.g., 1 KB to 500 KB) is typically transferred by wearable computing device 302. Some other examples of types of data that may constitute a small amount of data are messages, such as text messages, push notifications, and small/medium sized images.

In another example, computing device 100 may transfer music to wearable computing device 302. For instance, a music application executing on wearable computing device 302 may receive audio data from computing device 100. Audio data may typically be smaller than video data but larger than telemetry data. As such, prediction module 346 may determine that, when transferring audio data, an intermediate amount of data is typically transferred by wearable computing device 302 (e.g., 2 MB to 6 MB). Some other examples of types of data that may constitute an intermediate amount of data are multimedia content (e.g., mobile web pages) or large images.

Prediction module 346 may utilize contextual information to determine (e.g., predict) the amount of data to be transferred. Some examples of the contextual information include the current time, current date, location, and foreground applications and/or background applications that are currently running. As described with respect to FIG. 1, routing module 312 may be executed by wearable computing device 102 or computing device 100 in various examples of the disclosed techniques. As such, prediction module 346 of routing module 312 may collect or obtain the contextual information at wearable computing device 302, computing device 100, or both. Prediction module 346 may collect the contextual information and use the contextual information to predict the amount of data to be transferred. For example, prediction module 346 may determine the current time, current date, location, and foreground applications and/or background applications that are currently running, such as from an operating system or other process of wearable computing device 302 or computing device 100.

To illustrate with the above examples, prediction module 346 may determine video data will be transferred when a video player/streaming application 344 is running as a foreground application, audio data will be transferred when an audio player application 344 is running as a foreground application, and telemetry data will be transferred when a fitness application 344 is running as a foreground application. Prediction module 346 may predict the amount of data to be transferred based on the type of data (e.g., audio, video, telemetry, text, software/firmware, etc.). For example, prediction module 346 may store or include indications of an amount of data for each type of data. Referring to the above examples for instance, prediction module 346 may include indications that video data is 10 MB or more, audio data is 2 MB to 6 MB, telemetry data is 1 KB to 500 KB). Storage device 340 may store these indications in some examples.

Prediction module 346 may comprise one or more rules or heuristics that predict the amount of data to be transferred based on input data, such as the contextual information. In some examples, prediction module 346 may include one or more ML models 348 that may predict the amount of data to be transferred based on input data, such as the contextual information.

Prediction module 346 may train ML model 348 using a training data set comprising, for example, previously collected contextual information recorded during previous operation of a one or more wearable computing devices 302 or similar devices which may include contextual information including metrics indicating the amount of data transferred by such wearable computing devices 302 or similar devices, such as by applications 344, during such previous operation. Prediction module 346 may validate ML model 348 by applying ML model 348 to a validation data set and comparing predictions by the ML model 348 to actual amounts of data transferred in the validation data. Prediction module 346 may adjust various parameters of ML model 348 to achieve a desired level of prediction accuracy.

ML model 348 may be various machine learning models (e.g., linear regression, random forest, support vector machine (SVM), naive bayes, etc.) and prediction module 346 may train ML model 348 according to various supervised, unsupervised, reinforcement, or other training techniques. In addition to previously recorded training data set and validation data, prediction module 346 may collect contextual information during operation of wearable computing device 302 or computing device 100 and re-train ML model 348 using the collected contextual information. Prediction module 346 may re-validate ML model 348 by comparing predictions by ML model 348 to actual amounts of data transferred during operation of wearable computing device 302 or computing device 100. Prediction module 346 may adjust various parameters of ML model 348 to achieve a desired level of prediction accuracy.

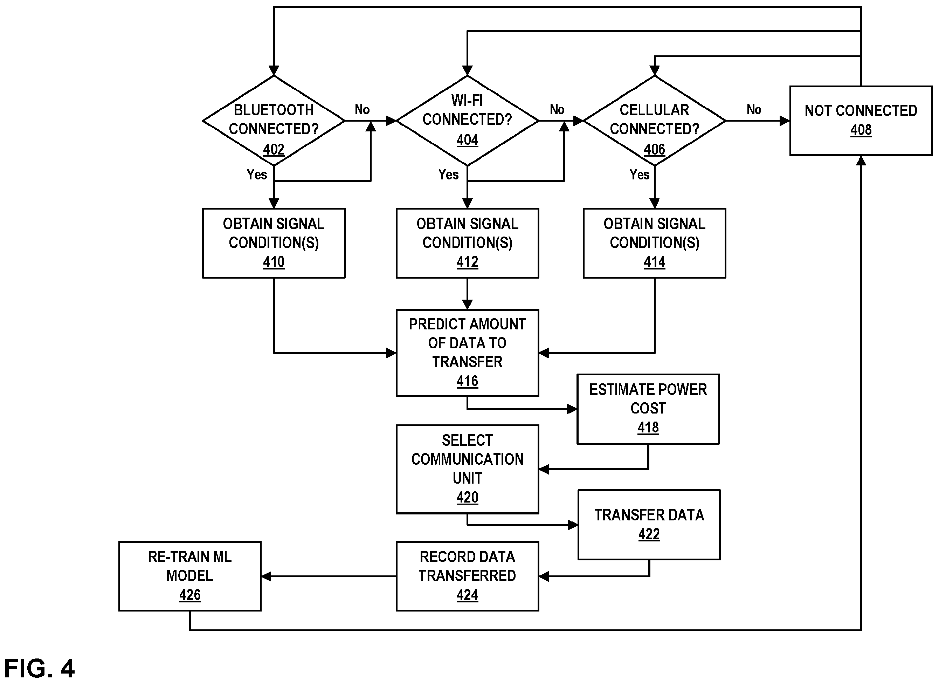

FIG. 4 is a flowchart illustrating a first example process for power efficient data routing, in accordance with one or more aspects of the present disclosure. Some aspects of FIG. 4 are described in the context of FIG. 1. Wearable computing device 102 may determine which of communication units 116 are connected to another device, such as computing device 100, either directly (e.g., through direct link 109) or through network 104. As shown in the example of FIG. 4 wearable computing device 102 may have a plurality of communication units 116. In the example of FIG. 4, wearable computing device 102 includes three communication units 116 with a first communication unit 116A being a BLUETOOTH radio, a second communication unit 116B being a WI-FI radio, and a third communication unit 116C being a cellular radio. As will now be described, wearable computing device 102, such as through connection module 343 of FIG. 3, may determine whether each communication unit 116 is connected to another device and obtain one or more signal conditions for each connected communication unit 116. Though described in a particular sequence (e.g., BLUETOOTH followed by WI-FI followed by cellular), wearable computing device 102 may determine whether individual communication devices 116 are connected in various sequences.

As shown in the example of FIG. 4, wearable computing device 102 may determine whether first communication unit 116A is connected to another device (402). Likewise, wearable computing device 102 may determine whether second communication unit 116B is connected to another device (404). Wearable computing device 102 may determine whether third communication unit 116C is connected to another device (406). As can be seen, wearable computing device 102 may determine whether a communication unit 116 (e.g., second communication unit 116B or third communication unit 116C) is connected to another device regardless of whether or not other communication units 116 (e.g., first communication unit 116A) are connected to another device.

In some circumstances, all communication units 116 may not be connected (408). For example, wearable computing device 102 may be too distant from any other device to establish a connection. Even in such circumstances, wearable computing device 102 may repeatedly (e.g., periodically) check, such as through connection module 343, whether one or more communication units 116 have a connection, such as described above in connection with steps 402, 404, and 406.

Wearable computing device 102, such as through signal condition module 110, may obtain one or more signal conditions for each communication unit 116 that is connected. For example, if first communication unit 116A is connected to another device, wearable computing device 102 may obtain one or more signal conditions for first communication unit 116A (410). Similarly, if second communication unit 116B is connected to another device, wearable computing device 102 may obtain one or more signal conditions for second communication unit 116B (412). If third communication unit 116C is connected to another device, wearable computing device 102 may obtain one or more signal conditions for third communication unit 116C (414). Referring to the example of Table 1 for instance, it can be seen that signal condition module 110 may determine whether each communication unit is currently experiencing good, poor, or other signal conditions.

Wearable computing device 102, such as through prediction module 346 of FIG. 3, may predict the amount of data (e.g., 100 KB, 200 KB, 1 MB, 40 MB) to be transferred (e.g., transmitted or received) by wearable computing device 102. As described above, wearable computing device 102 may apply ML model 348 to contextual information to predict the amount of data wearable computing device 102 will transfer. In some examples, the contextual information may include the current time, current date, location, and foreground applications and/or background applications that are currently running on wearable computing device 102.

With the obtained signal conditions and the predicted amount of data to transfer, wearable computing device 102 may estimate the power cost (e.g., percentage of power consumption or mWh) for one or more communication units 116 (e.g., communication units 116 that have a suitable connection for data to be transferred) (418). Wearable computing device 102 may estimate the power cost using routing module 112 and routing information 114 along with the obtained signal conditions and predicted amount of data to transfer. For example, routing module 112 may cross reference the obtained signal conditions and predicted amount of data to transfer with routing information 114 to identify a power cost for each communication unit 116 to transfer the predicted amount of data under the communication unit's respective signal condition. Referring to the example of Table 1 for instance, routing module 112 may estimate a power cost of 0.075% for first communication unit 116A, a power cost of 0.004% for second communication unit 116B, and a power cost of 0.03% for third communication unit 116C to download 1 MB of data in good signal conditions based on routing information 114.

Routing module 112 may select a communication unit from communication units 116 to transfer the data based on the identified power cost for each communication unit 116 (420). For example, routing module 112 may select communication unit 116 having a connection suitable to transfer the data and the lowest power cost. Continuing the above example, assuming signal condition module 110 has obtained a good signal condition for each communication unit, routing module may select second communication unit 116B with the power cost of 0.004%, which is the lowest power cost for transferring 1 MB of data under good signal conditions, as compared to the power cost of 0.075% for first communication unit 116A and the power cost of 0.03% for third communication unit 116C.

Wearable computing device 102 may use the selected communication unit, in this case second communication unit 116B, to transfer data (422). Wearable computing device 102, such as through prediction module 346 may record the actual amount of data transferred at step 422 (424). Prediction module 346 may use the actual amount of data transferred as well as the contextual information at the time of the data transfer as training data to re-train ML model 348 (426), such as to improve the accuracy of ML model's 348 predictions (e.g., predicted amount of data to transfer for various contextual information).

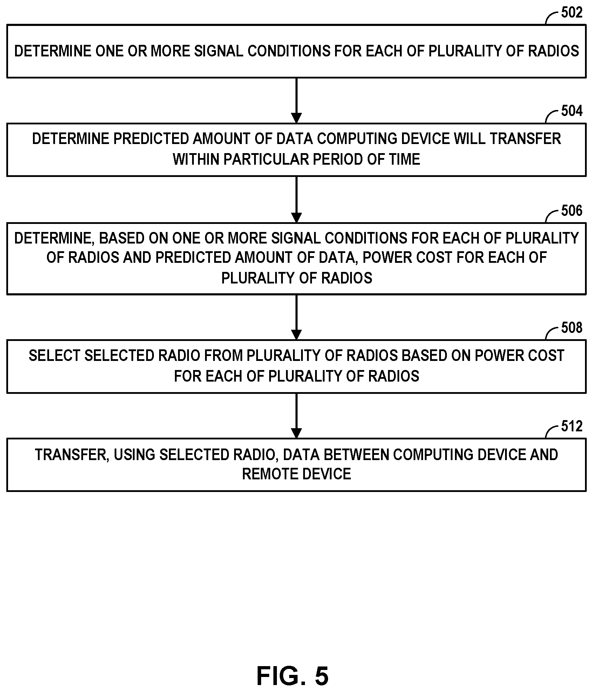

FIG. 5 is a flowchart illustrating a second example process for power efficient data routing, in accordance with one or more aspects of the present disclosure. Some aspects of FIG. 5 are described in the context of FIGS. 1 and 3. In some examples, wearable computing device 102 may determine one or more signal conditions for each of a plurality of radios 116 (502). For example, wearable computing device 102 may, such as through signal condition module 110, determine whether each of radios 116 currently has a good, poor, or other signal condition.

Wearable computing device 102 may determine a predicted amount of data wearable computing device 102 will transfer within a particular period of time (e.g., the amount of data to transfer) (504). In some examples, wearable computing device 102 may determine the predicted amount of data by applying ML model 348 to contextual information of the wearable computing device 102 to determine the predicted amount of data. The contextual information may, in some examples, be an indication selected from one or more of: an indication of one or more foreground applications, one or more background applications, a current time, or a current date. As described above, ML model 348 may infer the predicted amount of data to transfer based on the contextual information.

Wearable computing device 102 may determine (e.g., estimate), based on the one or more signal conditions for each of the plurality of radios 116 and the predicted amount of data, a power cost for each of the plurality of radios 116 (506). For example, wearable computing device 102 may query or cross reference routing information 114 with the signal conditions for each radio 116 and the predicted amount of data to determine the power cost for each radio 116. Routing information 114 may indicate the power cost of communication units 116 for various amounts of data and various signal conditions. For example, routing information 114 may include the power cost in terms of power consumption (e.g., mWh) for each radio 116 to transfer (e.g., transmit and/or receive) a given amount of data (e.g., 100 KBs, 500 KBs, 1 MB, 5 MB, etc.) under various signal conditions (e.g., various signal to noise or signal power levels). Routing information 114 may be a table or other data structure stored on wearable computing device 102 or that is otherwise accessible to wearable computing device 102.

Wearable computing device 102, may store a respective power cost per unit of data for each of the one or more signal conditions and each of the plurality of radios as routing information 114. As can be seen from the example of Table 1, the power cost per unit of data may be represented by a power cost (e.g., percentage of power consumption) for a given unit or amount of data (e.g., 1 MB). Wearable computing device 102 may determine the power cost for each of the plurality of radios by determining, based on the routing information and the predicted amount of data, the power cost for each of the plurality of radios.

Wearable computing device 102 may select a selected radio (e.g., radio 116B) from the plurality of radios 116 based on the power cost for each of the plurality of radios 116 (508). To select the selected radio from the plurality of radios 116, wearable computing device 102 may determine the selected radio has the lowest power cost of the respective power costs for each of the plurality of radios 116. For example, wearable computing device 102 may determine radio 116B, which may correspond to a WI-FI radio, has the lowest power cost of radios 116. As such, wearable computing device 102 may select radio 116B as the selected radio. Referring to the example of Table 1 for instance, wearable computing device 102 may estimate, such as through routing module 112, a power cost of 0.075% for first communication unit 116A, a power cost of 0.004% for second communication unit 116B, and a power cost of 0.03% for third communication unit 116C to download 1 MB of data in good signal conditions.

Wearable computing device 102 may transfer, using the selected radio (e.g., radio 116B), data between wearable computing device 102 and a remote device (e.g., computing device 100) (510). Transferring the data between wearable computing device 102 and the remote device may include wearable computing device 102 transmitting and/or receiving the data using the selected radio. In some examples, wearable computing device 102 may record the actual amount of data transferred by wearable computing device 102 within the particular period of time, and train ML model 348 using a training data set including previously collected contextual information and the actual amount of data.

In some examples, the remote device (e.g., computing device 100), rather than wearable computing device 102, may determine the predicted amount of data. In such case, determining the predicted amount of data may comprise receiving the predicted amount of data from the remote device and transferring the data between wearable computing device 102 and the remote device may comprise receiving the data using the selected radio (e.g., radio 116B). Wearable computing device 102 may send an indication of the selected radio to the remote device prior to transferring the data between wearable computing device 102 and the remote device. In this manner, the remote device may transmit the data to wearable computing device 102 such that wearable computing device 102 may receive the data using the selected radio. For example, if the selected radio is a WI-FI radio, the remote device may transmit the data over WI-FI. Similarly, if the selected radio is a cellular or BLUETOOTH radio, the remote device may transmit the data respectively over cellular or BLUETOOTH.

In one or more examples, the operations described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory and does not include a signal or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structures or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. Any combination of the described systems, operations, or functions is contemplated.

## Claims

1. A method comprising:
determining, by a computing device comprising a plurality of radios, one or more signal conditions for each of the plurality of radios;
determining, by the computing device, an amount of data the computing device is predicted to transfer within a particular period of time, the amount of data being a predicted amount of data;
determining, by the computing device and based on the one or more signal conditions for each of the plurality of radios and the predicted amount of data, a power cost for each of the plurality of radios;
selecting, by the computing device, a selected radio from the plurality of radios based on the power cost for each of the plurality of radios; and
transferring, by the computing device and using the selected radio, data between the computing device and a remote device.

2. The method of claim 1, wherein determining the predicted amount of data comprises applying, by the computing device, a machine learning model to contextual information of the computing device to determine the predicted amount of data.

3. The method of claim 2, wherein the contextual information is an indication selected from one or more of: an indication of one or more foreground applications, one or more background applications, a current time, or a current date.

4. The method of claim 2 or claim 3, further comprising:
determining, by the computing device, an actual amount of data transferred by computing device within the particular period of time; and
training, by the computing device, the machine learning model using a training data set including previously collected contextual information and the actual amount of data.

5. The method of any preceding claim , wherein selecting the selected radio from the plurality of radios comprises determining, by the computing device, the selected radio has a lowest power cost of the respective power costs for each of the plurality of radios.

6. The method of any preceding claim , wherein transferring the data between the computing device and the remote device comprises transmitting, by the computing device, the data using the selected radio.

7. The method of any preceding claim , wherein:
determining the predicted amount of data comprises receiving, by the computing device, the predicted amount of data from the remote device; and
transferring the data between the computing device and the remote device comprises receiving, by the computing device, the data using the selected radio.

8. The method of claim 7, further comprising sending, by the computing device, an indication of the selected radio to the remote device prior to transferring the data between the computing device and the remote device.

9. The method of any preceding claim, further comprising storing, by the computing device, a respective power cost per unit of data for each of the one or more signal conditions and each of the plurality of radios as routing information.

10. The method of claim 9, wherein determining the power cost for each of the plurality of radios comprises determining, based on the routing information and the predicted amount of data, the power cost for each of the plurality of radios.

11. A computing device comprising:
a memory that stores instructions; and
processing circuitry that executes the instructions to perform the method of any preceding claim.

12. Instructions, optionally stored on a non-transitory computer-readable storage medium, that, when executed by processing circuitry, cause the processing circuitry to perform the method of any of claims 1 to 10.
